(19) Europäisches Patentamt / European Patent Office / Office européen des brevets

(11) **EP 1 865 463 A2**

(12) **EUROPEAN PATENT APPLICATION**

(43) Date of publication:
**12.12.2007 Bulletin 2007/50**

(51) Int Cl.:
***G06T 5/00*** *(2006.01)*

(21) Application number: **07251880.6**

(22) Date of filing: **04.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **07.06.2006 GB 0611222**

(71) Applicant: **Tandberg Television ASA
0607 Oslo (NO)**

(72) Inventors:
 • **Mitchell, Arthur
   Winchester,
   Hampshire SO22 6JA (GB)**
 • **Huggett, Anthony Richard
   Eastleigh SO50 5PZ (GB)**

(74) Representative: **Want, Clifford James
   Harrison Goddard Foote
   40-43 Chancery Lane
   London WC2A 1JA (GB)**

(54) **Temporal noise analysis of a video signal**

(57)    A method of determining noise characteristics of a video signal includes forming an array 33 of luminance and/or chrominance differences between picture elements of successive frames and determining an absolute difference value 34 between a luminance and/or chrominance difference of a picture element and an average of the luminance and/or chrominance differences of a plurality of neighbouring picture elements. Occurrences of predetermined ranges of the difference value are counted and a histogram may be formed of a number of occurrences in each range.

**Fig. 3**

EP 1 865 463 A2

**Description**

This invention relates to determining noise characteristics of a video signal.

When attempting to filter out random noise from images, particularly video, it is advantageous to know the characteristics of the noise present. This knowledge allows a system to remove the noise more effectively while minimising any unwanted artefacts in the processed image. Noise may be characterised by its amplitude and a histogram of occurrences of amplitude ranges.

One method frequently used to characterise temporal noise is to subtract spatially co-located picture elements, hereinafter referred to as pels, in successive images to form a difference picture. However, this estimate of noise is greatly affected by objects in motion between successive pictures and produces an unreliable result which affects adversely any subsequent process that depends upon this measure of noise. A confusion of noise and movement is caused by their sharing a three dimensional spectral space occupied by a whole signal. An improvement can be effected by a noise estimation measurement method that avoids regions of the spectrum most likely to be occupied by signal spectral components caused by motion when seeking to reduce noise.

It is an object of the present invention at least to ameliorate the aforesaid shortcomings in the prior art.

According to a first aspect of the present invention there is provided a method of determining noise characteristics of a video signal comprising the steps of: forming an array of luminance and/or chrominance differences between picture elements of successive frames; determining an absolute difference value between a luminance and/or chrominance difference of a picture element and an average of the luminance and/or chrominance differences of a plurality of neighbouring picture elements; and counting occurrences of predetermined ranges of the difference value.

Conveniently, the absolute difference value is one of the square of the means of the differences and the positive root of the square of the means of the differences.

Conveniently, the plurality of neighbouring picture elements comprises the eight most immediate neighbouring picture elements.

Advantageously, the step of counting comprises storing at an address in memory a number of occurrences of the difference value within a predetermined range.

Conveniently, the method further comprises forming a histogram of a number of occurrences in the predetermined ranges of the difference value.

Preferably, for detecting whether a picture element is at an edge of a frame, the method comprises the further initial steps of: subtracting luminance and/or chrominance values of each of the pels surrounding a central pel being processed from a luminance and/or chrominance value of the central pel to obtain luminance and/or chrominance value differences; summing the luminance and/or chrominance value differences to obtain a summation; and determining whether the summation exceeds a threshold and if not performing the steps of claim 1 and if so sorting the difference values to determine a subset of a predetermined size of the smallest differences from the luminance and/or chrominance of the central picture element and using the subset as the neighbouring picture elements.

Conveniently, the subset of a predetermined size comprises four luminance differences.

According to a second aspect of the invention, there is provided an apparatus arranged to determine noise characteristics of a video signal comprising: subtraction means arranged to form an array of luminance and/or chrominance differences between picture elements of successive frames; processing means arranged to determine an absolute difference value between a luminance and/or chrominance difference of a picture element and an average of the luminance and/or chrominance differences of a plurality of neighbouring picture elements; and counting means arranged to count occurrences of predetermined ranges of the difference value.

Conveniently, the absolute difference value is one of the square of the means of the differences and the positive root of the square of the means of the differences.

Conveniently, the plurality of neighbouring picture elements comprises the eight most immediate neighbouring picture elements.

Advantageously, the counting means comprises a memory arranged to store at an address a number of occurrences of the difference value within a predetermined range.

Conveniently, the apparatus further comprises plotting means arranged to form a histogram of a number of occurrences in the predetermined ranges of the difference value.

Preferably, to detect whether a picture element is at an edge of a frame, the apparatus further comprises: subtraction means arranged to subtract luminance and/or chrominance values of each of the pels surrounding a central pel being processed from a luminance and/or chrominance value of the central pel to obtain luminance and/or chrominance value differences; summing means arranged to sum the luminance and/or chrominance value differences to obtain a summation; and processing means arranged to determine whether the summation exceeds a threshold and if so sorting the difference values to determine a subset of a predetermined size of the smallest differences from the luminance and/or chrominance of the central picture element and using the subset as the neighbouring picture elements.

Conveniently, the subset of a predetermined size comprises four luminance differences.

According to a third aspect of the invention, there is provided a computer program comprising code means for performing all the steps of the method described above, when the program is run on one or more computers.

The invention will now be described, by way of example, with reference to the accompanying drawings in which:

Figure 1 is a Nyquist cube of a spatial and temporal domain of successive images;

Figure 2 is a schematic representation of picture order;

Figure 3 is a schematic representation of a method according to the invention of calculating differences between picture elements of successive frames;

Figure 4 is a schematic representation of a method a creating a histogram of the differences of Figure 3;

Figure 5: is a schematic representation of the method of Figure 3, enhanced for picture elements situated at an edge of a frame or near a significant variation in the picture;

Figure 6 is a flowchart of a method of determining noise characteristics according to the invention;

Figure 7 is a schematic representation of a further embodiment of a method according to the invention of calculating differences between picture elements of successive frames;

Figures 8 and 9 are plots, helpful in understanding the invention, of two-dimensional examples of an analogue video signal which has been sampled in the digital domain; and

Figure 10 is a plot, helpful in understanding the invention, of the effect of noise on a sampling curve.

In the Figures like reference numerals denote like parts.

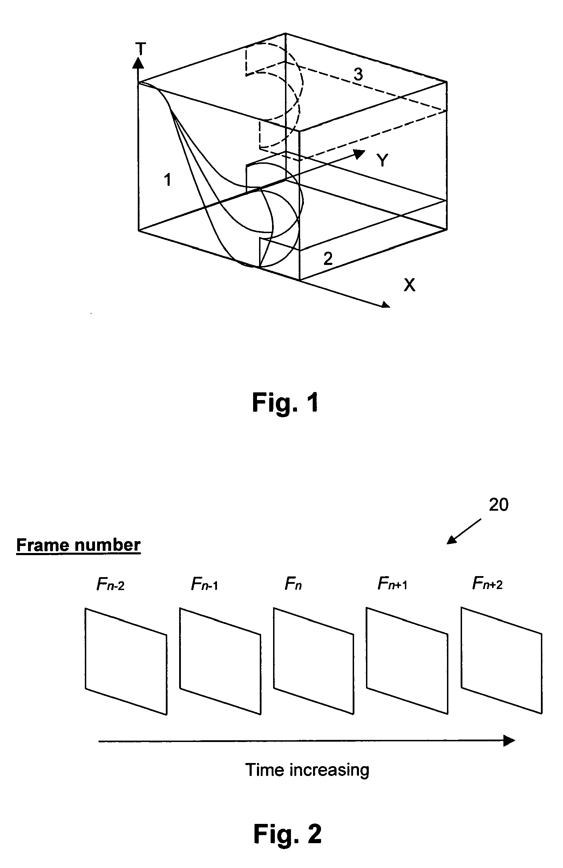

Figure 1 shows a spatial and temporal frequency domain as a three dimensional cube. The X and Y axes represent the spatial frequency dimension within an image and T represents the temporal frequency domain between successive images. The Nyquist cube, illustrated in Figure 1, represents the complete signal space. Region 1 should contain most of the spectral energy from the image and the motion in the underlying image while still containing a proportion of the white noise present.

Region 1 represents a region normally occupied by moving picture information, as it generally has lower spatial frequency with reduced occupancy at high temporal frequencies. Region 2 is a distinct area located at high spatial and low temporal frequencies. Region 3 is the space where both high spatial and temporal frequencies are found. Generally speaking, it is assumed that the noise is "white", that is, it is evenly distributed throughout the Nyquist cube.

So, compared to the prior art, a more reliable estimate of the noise present in a signal can be obtained by looking in regions of the spectrum where the video signal energy is consistently reduced. This occurs at high frequencies in both the spatial and temporal dimensions where an accumulation of the signal energy present correlates more closely with the noise and not the image and motion present.

Processes, both natural and synthetic, within the capture and processing of a video channel mean that the spatial noise tends to be "pink", that is, it is attenuated towards the high frequencies. However, this attenuation tends to be constant, and the high frequency components are only attenuated to a limited degree. It is straightforward to compensate for the attenuation by means of a simple scaling factor. The important feature of note is that in Region 3 there is always noise present and occasionally signal so that noise predominates.

The following method characterises the image noise from the high frequency Region 3 of Figure 1. Advantageously this profiling of the noise is done without resorting to a large number of calculations and processing power required by frequency domain methods such as Fourier transforms. The method also requires only one image to be stored at any time, minimising storage requirements and access bandwidth to that storage.

**Noise array calculation**

Referring to Figure 2, the $n^{th}$ image in a video sequence is defined as $F_n = \{f_n(x,y)\}$. The difference array $D_n = \{d_n(x,y)\}$ for this image is given by:

$$d_n(x,y) = f_n(x,y) - f_{n-1}(x,y)$$

**Equation 1**

i.e. the difference between co-located pixels in the current and previous frames.

Assuming a difference between a picture element and its immediately surrounding picture elements represents noise, the absolute noise amplitude array $A_n = \{a_n(x,y)\}$ can be calculated as:

$$a_n(x,y) = \left| \frac{\left(\sum_{l=-1}^{1}\sum_{m=-1}^{1} d_n(x+l,y+m)\right) - 9 \times d_n(x,y)}{8} \right|$$

**Equation 2**

This equation sets $a_n(x,y)$ equal to the absolute value of the mean of the difference between the sum of the 9 pels in the chosen array adjacent to the pel at position (x,y) and 9 times the value of that pel, there being 9 pels in the sum but only 8 to average. The region size of 9 pels is used for this example but other convenient array sizes may also be used.

However, alternative measures can be used instead, for example, the square of means of the differences between each of the 8 pels in the chosen array adjacent to the pel at position (x,y), as illustrated by equation 3. The positive root of the square of the means could be an equally appropriate alternative as in Equation 4. The size of the array in this example is 9 pels but could be any convenient value.

$$a_n(x,y) = \left[ \frac{\left(\sum_{l=-1}^{1}\sum_{m=-1}^{1} d_n(x+l,y+m) - 9 \times d_n(x,y)\right)}{8} \right]^2$$

**Equation 3**

$$a_n(x,y) = \pm\sqrt{\left(\frac{\left(\sum_{l=-1}^{1}\sum_{m=-1}^{1} d_n(x+l,y+m) - 9 \times d_n(x,y)\right)}{8}\right)^2}$$

**Equation 4**

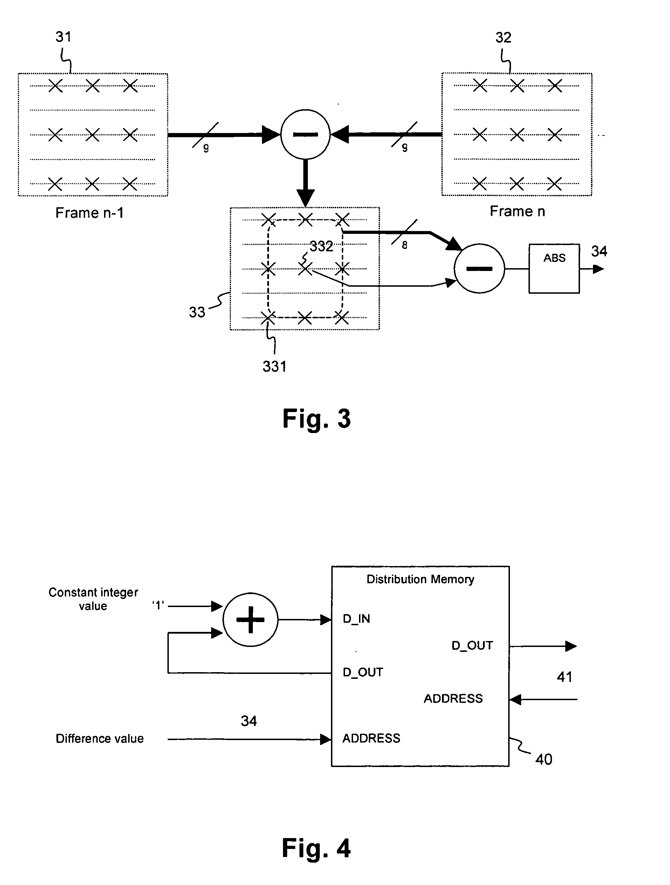

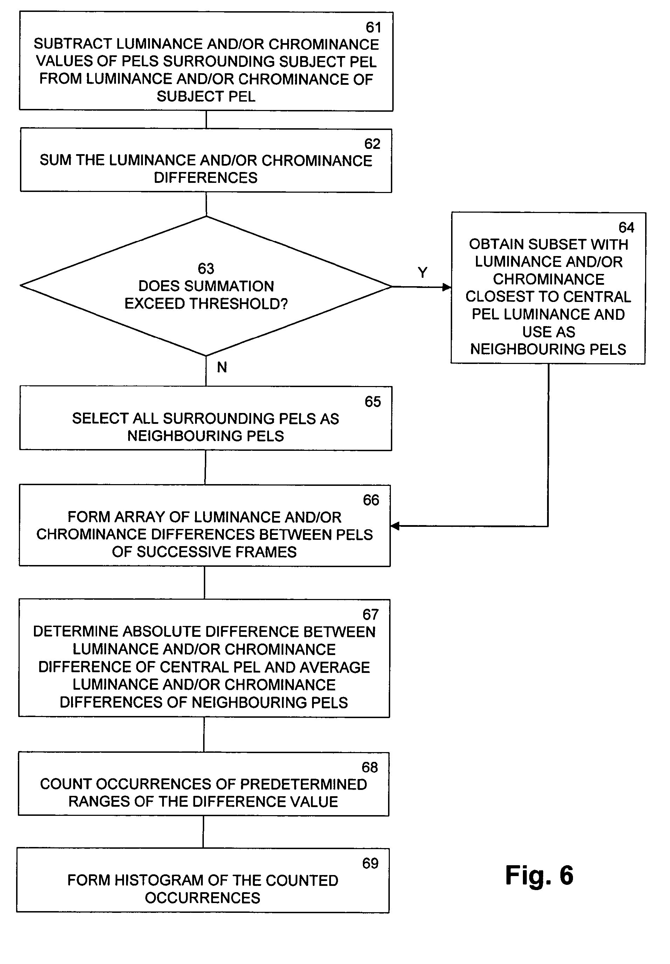

Figure 3 represents the action of the formulae from Equation 2. Referring also to Figure 6, block 31 represents

4

frame n-1 and block 32 frame n. The first stage is a subtraction, step 67, of all spatially co-located samples in frame n-1, block 31, from those in frame n, block 32, providing a new data field, block 33. The 8 difference values 331 surrounding the difference value 332 of the pel under operation are then summated and normalised and their average subtracted from the central value and its absolute value 34 output. Note that for interlaced images pels from adjacent lines in the same field are used and for progressive scan images successive lines are used. This ensures that all the samples used are taken from a same instant and therefore suffer no temporal shear between them.

**Calculation of difference distribution**

The difference distribution P(v) is a histogram i.e. a count of the number of times each possible value v of $a_n$ occurs within the noise amplitude array $A_n$.

$$P(v) = \sum_{y=1}^{Y} \sum_{x=1}^{X} \begin{Bmatrix} 1 & | & a_n(x,y) = v \\ 0 & | & a_n(x,y) \neq v \end{Bmatrix}$$

## Equation 5

where X and Y are the number of pels in each dimension of the image.

Note that if chrominance information is processed as per equations 1 & 2 a separate difference distribution would be accumulated for those results with the assumption that further downstream processing would act separately on these luminance and chrominance noise difference distributions.

In Figure 4, each difference value 34 from Figure 3 in turn is used to address a memory 40; the contents of the memory at the location D_OUT pointed to by the difference value are incremented by 1 and written back into the same location D_IN, step 68. It is assumed that all locations in the memory are initialised to zero at the start of processing for each image.

At the end of processing an image, the memory contains data for a histogram, step 69, of the occurrences of values of the difference which may be used to provide an estimate of the high frequency noise. This may be read 41 and used in other algorithms and systems, not described herein, e.g. to control the noise reduction profile used in the Applicant's application 0610967.2 filed on 2 June 2006.

It will be understood that the method described works in two stages. The first stage is to filter the temporal domain. By subtracting one image from the next a difference picture is obtained.

The second stage of the method discriminates spatial high frequencies from movement by relying on a limited bandwidth mandated in the specifications for sampling of digital video and the nature of most images.

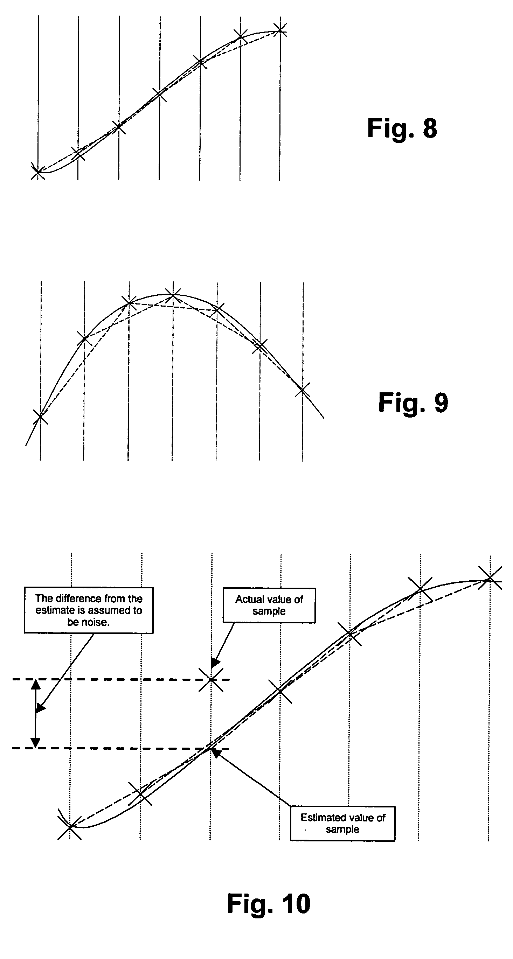

Figures 8 and 9 show some two dimensional examples of analogue video that has been sampled into the digital domain. The solid line represents the original analogue voltage and the dashed lines show the two point linear interpolation from one pel to the next but one.

As sampling to digital requires that the bandwidth be limited to below the Nyquist rate, it can be seen that for many points this crude interpolation gives a reasonable approximation of the pel between the examined samples.

When this example is carried on to two-dimensional images the pels in all directions from the pel under operation are used to form the estimated value. This means that edges from any relative direction will be accounted for in the predicted value. The calculation of this two-dimensional average can be thought of as producing a three-dimensional mesh or surface in which the fundamental limit to the bandwidth of the signal is used to form an estimated value to the central pel.

Noise is assumed to come into this process by randomly moving the value of samples with respect to their expected values. Figure 10 shows this graphically.

The action of subtracting the expected value from the actual value can be assumed to give an estimate of the noise. The limitation on this method can be seen in the graph of figure 8. Here the curvature of the edge leads to an error in interpolation when using only two points.

Two methods to improve the estimate are to do a better interpolation, possibly using an FIR filter with a number of taps in each direction or to discard samples with larger differences from the average process.

**Further Extension**

One impairment to accurately mapping the noise is that pels that are close to edges of objects within the image tend to produce a difference from the average signal related not to the noise but to the sampling phase related to the position of the edge.

A further enhancement to improve the accuracy of the constructed noise statistics is to detect which pels fall into this category and subtract them, not from the average of the surrounding 8 pels, but from the average of a subset of pels that have the closest corresponding luminance level. The decision as to which method to use can be made based on some convenient statistical measure within the target area.

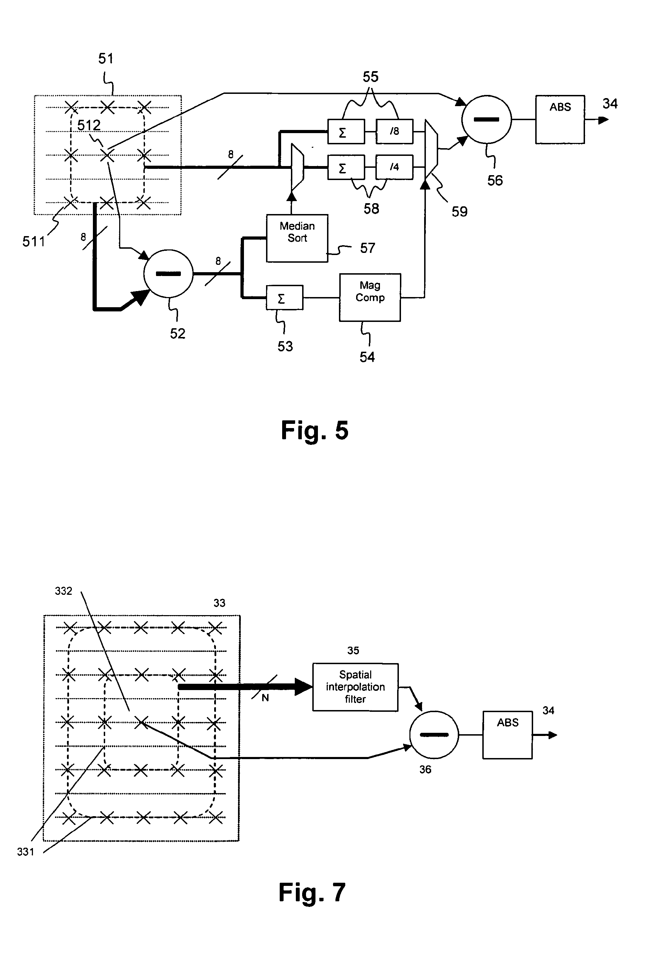

Referring to Figures 5 and 6, this can be implemented as follows. In an image 51, each of eight pels 511 surrounding a pel 512 being processed has its luminance value subtracted 52, step 61, from the luminance value of the centre pel 512. These values are summated 53, step 62, and a magnitude of the summation is compared 54, step 63, to a threshold to produce a binary decision on which method is used which is input to a switch 59. Alternative algorithms may be use to derive this information, such as a measure of signal behaviour.

If the summated difference, or sum of squares which would be equally valid, falls below the threshold then the luminance levels of the eight surrounding pels are selected, step 65, and averaged 55 and switched 59 to be subtracted 56 from the luminance level of the pel being processed, as before. If the threshold is exceeded then the difference values are sorted 57, step 64, to find which subset matches most closely the level of the centre pel 512. The four, or other suitable number of, closest matches then have their absolute luminance levels averaged 58 and switched 59 to be subtracted 56 from the pel under operation.

Referring to Figure 7, in a further optional enhancement to the embodiment shown in Figures 3 and 5 is to take the difference pel field 33 and input a larger set of neighbouring pels 331 to a multidimensional spatial interpolation filter 35. The output of this block is input to the subtractor 36 and subtracted from the pel under operation 332.

One suitable form for the spatial interpolation filter 35 would be a multi-tap FIR filter.

### Claims

1. A method of determining noise characteristics of a video signal comprising the steps of:

   a. forming an array of luminance and/or chrominance differences between picture elements of successive frames (31, 32);
   b. determining (67) an absolute difference value between a luminance and/or chrominance difference of a picture element and an average of the luminance and/or chrominance differences of a plurality of neighbouring picture elements; and
   c. counting (68) occurrences of predetermined ranges of the difference value.

2. A method as claimed in claim 1, wherein the absolute difference value is one of the square of the means of the differences and the positive root of the square of the means of the differences.

3. A method as claimed in claims 1 or 2, wherein the plurality of neighbouring picture elements comprises the eight most immediate neighbouring picture elements.

4. A method as claimed in any of the preceding claims, wherein the step of counting comprises storing at an address in memory a number of occurrences of the difference value within a predetermined range;

5. A method as claimed in claim 4, further comprising forming (69) a histogram of a number of occurrences in the predetermined ranges of the difference value.

6. A method as claimed in any of the preceding claims comprising detecting whether a picture element is at an edge of a frame comprising the initial steps of:

   d. subtracting (61) luminance and/or chrominance values of each of the pels surrounding a central pel being processed from a luminance and/or chrominance value of the central pel to obtain luminance and/or chrominance value differences, and optionally chrominance differences;
   e. summing (62) the luminance and/or chrominance value differences to obtain a summation; and
   f. determining (63) whether the summation exceeds a threshold and if not performing (65) the steps of claim 1 and if so sorting the difference values to determine (64) a subset of a predetermined size of the smallest differences from the luminance and/or chrominance of the central picture element and using the subset as the neighbouring picture elements of claim 1.

7. A method as claimed in claim 6, wherein the subset of a predetermined size comprises four luminance differences.

**8.** An apparatus arranged to determine noise characteristics of a video signal comprising:

   a. subtraction means arranged to form an array of luminance and/or chrominance differences between picture elements of successive frames (31, 32);
   b. processing means arranged to determine an absolute difference value between a luminance and/or chrominance difference of a picture element and an average of the luminance and/or chrominance differences of a plurality of neighbouring picture elements; and
   c. counting means arranged to count occurrences of predetermined ranges of the difference value.

**9.** An apparatus as claimed in claim 8, wherein the absolute difference value is one of the square of the means of the differences and the positive root of the square of the means of the differences.

**10.** An apparatus as claimed in claims 8 or 9, wherein the plurality of neighbouring picture elements comprises the eight most immediate neighbouring picture elements.

**11.** An apparatus as claimed in any of claims 8 to 10, wherein the counting means comprises a memory arranged to store at an address a number of occurrences of the difference value within a predetermined range.

**12.** An apparatus as claimed in claim 11, further comprising plotting means arranged to form a histogram of a number of occurrences in the predetermined ranges of the difference value.

**13.** An apparatus as claimed in any of preceding claims 8 to 12 arranged to detect whether a picture element is at an edge of a frame, the apparatus further comprising:

   g. subtraction means (52) arranged to subtract luminance and/or chrominance values of each of the pels surrounding a central pel being processed from a luminance and/or chrominance value of the central pel to obtain luminance and/or chrominance value differences;
   h. summing means (53) arranged to sum the luminance and/or chrominance value differences to obtain a summation; and
   i. processing means (54) arranged to determine whether the summation exceeds a threshold and if so sorting the difference values to determine a subset of a predetermined size of the smallest differences from the luminance and/or chrominance of the central picture element and using the subset as the neighbouring picture elements.

**14.** An apparatus as claimed in claim 13, wherein the subset of a predetermined size comprises four luminance differences.

**15.** A computer program comprising code means for performing all the steps of the method of any of claims 1 to 7 when the program is run on one or more computers.

**Fig. 1**

Frame number

$F_{n-2}$    $F_{n-1}$    $F_n$    $F_{n+1}$    $F_{n+2}$

Time increasing

**Fig. 2**

31

Frame n-1

32

Frame n

332

33

331

8

ABS

34

**Fig. 3**

Constant integer value

'1'

+

Distribution Memory

D_IN

D_OUT

D_OUT

D_OUT

ADDRESS

41

34

Difference value

ADDRESS

40

**Fig. 4**

**Fig. 5**

**Fig. 7**

61
SUBTRACT LUMINANCE AND/OR CHROMINANCE
VALUES OF PELS SURROUNDING SUBJECT PEL
FROM LUMINANCE AND/OR CHROMINANCE OF
SUBJECT PEL

62
SUM THE LUMINANCE AND/OR CHROMINANCE
DIFFERENCES

63
DOES SUMMATION
EXCEED THRESHOLD?

Y

64
OBTAIN SUBSET WITH
LUMINANCE AND/OR
CHROMINANCE
CLOSEST TO CENTRAL
PEL LUMINANCE AND
USE AS
NEIGHBOURING PELS

N

65
SELECT ALL SURROUNDING PELS AS
NEIGHBOURING PELS

66
FORM ARRAY OF LUMINANCE AND/OR
CHROMINANCE DIFFERENCES BETWEEN PELS
OF SUCCESSIVE FRAMES

67
DETERMINE ABSOLUTE DIFFERENCE BETWEEN
LUMINANCE AND/OR CHROMINANCE
DIFFERENCE OF CENTRAL PEL AND AVERAGE
LUMINANCE AND/OR CHROMINANCE
DIFFERENCES OF NEIGHBOURING PELS

68
COUNT OCCURRENCES OF PREDETERMINED
RANGES OF THE DIFFERENCE VALUE

69
FORM HISTOGRAM OF THE COUNTED
OCCURRENCES

**Fig. 6**

**Fig. 8**

**Fig. 9**

The difference from the estimate is assumed to be noise.

Actual value of sample

Estimated value of sample

**Fig. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0610967 A